# EUROPÄISCHE PATENTANMELDUNG

(11) **EP 1 862 965 A1**
(43) Veröffentlichungstag der Anmeldung: **05.12.2007**
(21) Anmeldenummer: 07010772.7
(22) Anmeldetag: 31.05.2007
(51) Int. Cl.: G06Q 90/00, G06Q 50/00

(54) **Computersystem zur Wiederbeschaffung von personenbezogenen Reisedokumenten**

(30) Priorität: 01.06.2006 DE 102006025495
(71) Anmelder: Neubauer, Carola, 93152 Undorf (DE)
(72) Erfinder: Neubauer, Carola, 93152 Undorf (DE)
(74) Vertreter: Glück, Martin

(57) **Zusammenfassung**

Das Computersystem umfasst zumindest eine zentrale und dezentrale Rechnereinheit und eine Datenbankeinheit, wobei von der dezentralen Rechnereinheit eine Kommunikationsverbindung zu der zentralen Rechnereinheit aufgebaut ist. Die personenbezogenen Reisedaten und -dokumente zumindest eines Reisenden und vom Reisenden vor Antritt der Reise vorgegebene elektronische Transaktionen in Form von ein oder mehreren Transaktionsroutinen sind in der Datenbankeinheit in elektronischer Form gespeichert und die Datenbankeinheit und die zentrale Rechnereinheit bilden ein Reisedaten-Managementsystem, welches derart eingerichtet ist, dass über eine auf der zentralen Rechnereinheit ausgeführte Reisedaten-Managementroutine nach einer Identifizierung und Authentifizierung des Reisenden am Reisedaten-Managementsystem vom identifizierten und authentifizierten Reisenden vorgegebene ein oder mehrere Transaktionsroutinen aufgerufen und ausgeführt und/oder die dem identifizierten und authentifizierten Reisenden zugeordneten personenbezogenen Reisedaten und - dokumente zur dezentralen Rechnereinheit übertragen werden. Besonders vorteilhaft ist hierüber eine elektronische Sperrung von Kreditkarten und Scheckkarten, von Mobilfunkkarte(n) und/oder der Krankenkarte des Reisenden möglich.

## Beschreibung

Die Erfindung betrifft ein Computersystem zur Wiederbeschaffung von personenbezogenen Reisedokumenten gemäß dem Oberbegriff des Patentanspruches 1.

Computersysteme zur Archivierung von personenbezogenen Daten, beispielsweise Kredit- oder Scheckkartendaten, Krankenkartendaten, Vertragsdaten von Mobilfunkverträgen, PIN- und MEI-Nummern sind hinreichend bekannt. Auch sind Dokumenten-Managementsysteme bekannt, die zur Archivierung von unterschiedlichsten Arten von Dokumenten eingesetzt werden. Hierzu werden die überwiegend in Papierform vorliegenden Dokumente eingescannt und in einem durchsuchbaren Format systematisch elektronisch archiviert.

Im Rahmen von Auslandsreisen tritt häufig ein Verlust oder Diebstahl wichtiger personenbezogener Reisedokumente wie beispielsweise des Reisepasses, des Personalausweises, der Fahrscheine oder Flugtickets sowie von persönlichen Wertgegenständen wie beispielsweise des Mobiltelefons, Bargeld, Kreditkarten, Schlüssel etc. auf, deren Wiederbeschaffung für den jeweils im Ausland befindlichen Reisenden äußerst beschwerlich bzw. in den meisten Fällen ohne die Mithilfe von Freunden und Verwandten im Heimatland nahezu unmöglich ist.

Ausgehend von dem genannten Stand der Technik ist es Aufgabe der vorliegenden Erfindung, ein Computersystem anzugeben, mit welchem die Wiederbeschaffung von beispielsweise durch einen Diebstahl abhanden gekommenen personenbezogenen Reisedaten- und -dokumenten und/oder Gegenständen wesentlich zu erleichtern. Die Aufgabe wird ausgehend vom Oberbegriff der abhängigen Patentansprüche durch dessen kennzeichnende Merkmale gelöst. Vorteilhafte Weiterbildungen des erfindungsgemäßen Computersystems sind den abhängigen Ansprüchen zu entnehmen.

Der wesentliche Aspekt des erfindungsgemäßen Computersystems ist darin zu sehen, dass die personenbezogenen Reisedokumente zumindest eines Reisenden vor Antritt der Reise in Form von elektronischen Reisedokumentdaten in der Datenbankeinheit gespeichert werden, und dass die Datenbankeinheit und die zentrale Rechnereinheit ein Reisedokument-Managementsystem bilden, welches derart eingerichtet ist, dass über eine in der zentralen Rechnereinheit ausgeführte Reisedokument-Managementroutine nach einer Identifizierung und Authentifizierung des Reisenden am Reisedokument-Managementsystem die dem Reisenden in der Datenbankeinheit zugeordneten personenbezogenen Reisedokumentdaten über die Kommunikationsverbindung zur Verfügung gestellt werden. Vorteilhaft können durch das erfindungsgemäße Computersystem durch einen Reisenden nach Totalverlust sämtlicher Reisedokumente, Bargeld und weiterer wichtiger Gegenstände diese zumindest teilweise innerhalb kürzester Zeit wiederbeschafft werden.

Weiterhin vorteilhaft weist das Reisedokument-Managementsystem eine Benutzeroberfläche auf, über welche die dem Reisenden in der Datenbankeinheit zugeordneten personenbezogenen Reisedokumentdaten angezeigt werden. Auch wird dem Reisenden über die Benutzeroberfläche eine Auswahlliste mit dem in Form der personenbezogenen Reisedokumentdaten gespeicherten Reisedokumente angezeigt, über welche der Reisende online die wiederzubeschaffenden personenbezogenen Reisedokumente auswählen kann.

Die Identifizierung und Authentifizierung des Reisenden am Reisedokument-Managementsystem erfolgt hierbei durch die Eingabe von Identifikations- und Authentifizierungsdaten über die Benutzeroberfläche, wobei als Identifikations- und Authentifizierungsdaten beispielsweise der Name, der Geburtstag, Wohnort, PIN-Code eines Mobilfunkgerätes und/oder Ort des Vertragsabschlusses verwendet werden können.

Der Reisende kann beispielsweise über eine Call-Center-Einheit und eine zugeordnete kostenlose Rufnummer eine Identifizierung und Authentifizierung am Reisedaten-Managementsystem durchführen und anschließend eine sprachgesteuerte Bedienung der Reisedaten-Managementroutine über die Call-Center-Einheit vornehmen.

In einer besonders vorteilhaften Ausbildung des Computersystems werden vom Reisenden vor Antritt der Reise computergesteuert durchführbare Transaktionen vorgegeben, welche in Form von ein oder mehreren Transaktionsroutinen in der Datenbankeinheit gespeichert werden und die nach einer Identifizierung und Authentifizierung des Reisenden am Reisedokument-Managementsystem automatisch aufgerufen und ausgeführt werden. Als computergesteuert durchführbare Transaktion ist beispielsweise eine elektronische Sperrung von Kreditkarten und Scheckkarten, der Mobilfunkkarte und/oder der Krankenkarte des Reisenden vorgesehen.

Neben der Wiederbeschaffung von Reisedokumenten kann der Kunde über das Reisedokumenten-Managementsystem weitere computergesteuert durchführbare Transaktionen, beispielsweise die Wiederbeschaffung von Bargeld einleiten. Beispielsweise sind über die Benutzeroberfläche die Kontoverbindungsdaten des zur Überweisung vorgesehenen Bankkontos eingebbar. Gleichzeitig wird der Verlust der abhanden gekommenen Reisedokumente, insbesondere des Reisepasses oder Personalausweises den zuständigen Behörden, insbesondere der Polizei mitgeteilt.

Durch den Reisenden werden vor Antritt der Reise vorbereitete Dokumente und/oder Faxschreiben mit Blanko-Unterschriften versehen, welche in einem computergesteuerten Schließfach hinterlegt sind, das gesteuert über die Reisedokument-Managementroutine entriegelbar ist. Bei Verlust von Schlüsseln oder weiterer Wertgegenstände können beispielsweise zur deren Wiederbeschaffung vorbereitete Schreiben mit Blanko-Unterschriften unmittelbar über das Reisedokumenten-Managementsystem abgesandt werden.

Besonders vorteilhaft kann als weitere elektronische Transaktion eine elektronische Überweisung von Bargeld auf ein vom Reisenden vorgegebenes Bankkonto im Reiseland vorgesehen sein.

Als Identifikations- und Authentifizierungsdaten werden der Name, Geburtstag, Wohnort, PIN Code des Mobilfunkgerätes und/oder Ort des Vertragsabschlusses vorgesehen.

Nach der Identifizierung und Authentifizierung des Reisenden am Reisedokument-Managementsystem kann eine automatische elektronische Benachrichtigung von durch den Reisenden vorzugsweise vor Antritt der Reise bestimmten Personen über eine SMS-Nachricht , eine FAX-Nachricht oder eine Emailnachricht erfolgen.

Im Folgenden wird die Erfindung an einem Ausführungsbeispiel anhand einer Figur näher erläutert.

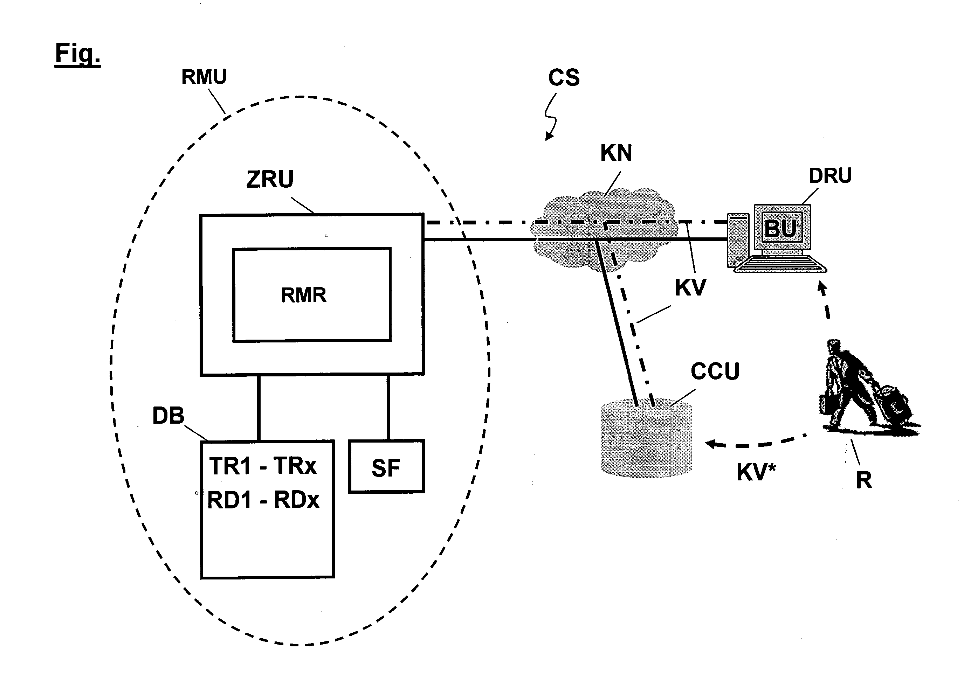

In der Figur ist beispielhaft ein Computersystem CS in einem schematischen Blockschaltbild dargestellt, welches ein Reisedokument-Managementsystem RMU aufweist, an dass über ein Kommunikationsnetz KN eine Kommunikationsverbindung KV zu einer dezentralen Rechnereinheit DRU und/oder einer Call-Center-Einheit CCU aufgebaut ist.

Das Reisedokument-Managementsystem RMU weist eine zentrale Rechnereinheit ZRU sowie eine an diese angeschlossene Datenbankeinheit DB auf. Darüber hinaus ist an die zentrale Rechnereinheit ZRU ein computergesteuertes Schließfach SF anschließbar.

In der Datenbankeinheit DB sind personenbezogene Reisedokumentdaten RD1 - RDx zumindest eines Reisenden R gespeichert. Die personenbezogenen Reisedokumentdaten RD1 - RDx umfassen beispielsweise sämtliche Reisedokumente eines Reisenden R wie Reisepass, Personalausweis, Kreditkartenunterlagen, Versicherungsunterlagen, Bankverbindungsdaten, ggf. wichtige persönliche Notizen etc. Diese werden beispielsweise vor Antritt einer Reise durch den Reisenden R entweder in Papierform oder bereits elektronisch in Form von personenbezogenen Reisedokumentdaten RD1 - RDx dem Betreiber des Reisedokument-Managementsystems RMU zur Verfügung gestellt. Lediglich in Papierform vorliegende Reisedokumente werden elektronisch aufbereitet, d.h. eingescannt und den weiteren Reisedokumentdaten RD1 - RDx des Reisenden R innerhalb der Datenbankeinheit DB zugeordnet.

Ferner werden vom jeweiligen Reisenden R vor Antritt der Reise mehrere computergesteuert durchführbare Transaktionen vorgegeben, welche im Falle beispielsweise des Verlusts oder Diebstahls der in Form der personenbezogenen Reisedokumentdaten RD1 - RDx hinterlegten Reisedokumente automatisch durch das Reisedokument-Managementsystem RMU abzuarbeiten sind. Diese werden in Form von ein oder mehreren Transaktionsroutinen TR1 - TRx ebenfalls in der Datenbankeinheit DB hinterlegt und dem jeweiligen Reisenden R sowie dessen personenbezogenen Reisedokumentdaten RD1 - RDx zugeordnet.

In der zentralen Rechnereinheit ZRU ist eine Reisedokument-Managementroutine RMR vorgesehen, welche zur Bedienung eine Benutzeroberfläche BU aufweist. Beim Aufruf der Reisedokument-Managementroutine RMR beispielsweise durch die dezentrale Rechnereinheit DRU über die bestehende Kommunikationsverbindung KV wird die Benutzeroberfläche BU der Reisedokument-Managementroutine RMR in der dezentralen Rechnereinheit DRU ausgeführt. In einer alternativen Ausführungsform kann der Aufruf der Reisedokument-Managementroutine RMR auch durch Aufbau einer weiteren Kommunikationsverbindung KV* zur Call-Center-Einheit CCU erfolgen, über welche ebenfalls eine Kommunikationsverbindung KV über das Kommunikationsnetz KN zum Reisedokument-Managementsystem RMU besteht. Der Reisende R wählt hierzu beispielsweise über ein öffentliches Telefon eine kostenlose Rufnummer und wird mit der Call-Center-Einheit CCU verbunden, über welche eine Sprachgesteuerte Bedienung der Reisedokument-Managementroutine RMR ebenfalls möglich ist.

Das Reisedokument-Managementsystem RMU ist hierbei derart eingerichtet, dass über die auf der zentralen Rechnereinheit ZRU ausgeführte Reisedokument-Managementroutine RMR nach einer Identifizierung und Authentifizierung des Reisenden R am Reisedokument-Managementsystem RMU die dem Reisenden R in der Datenbankeinheit DB zugeordneten personenbezogenen Reisedokumentdaten RD1 - RDx über die Kommunikationsverbindung KV zur Verfügung gestellt werden. Über die Benutzeroberfläche BU des Reisedokument-Managementsystems RMU werden dem Reisenden R die diesem in der Datenbankeinheit DB zugeordneten personenbezogenen Reisedokumentdaten RD1 - RDx angezeigt. Alternativ können dem Reisenden R über die Call-Center-Einheit CCU die über das Reisedokument-Managementsystems RMU verfügbaren Reisedokumente angesagt werden.

Ferner kann der Reisende R über die Benutzeroberfläche BU über eine Auswahlliste online die wiederzubeschaffenden Reisedokumente auswählen, welche ihm anschließend beispielsweise zum Download auf die dezentrale Rechnereinheit DRU zur Verfügung gestellt werden. Alternativ kann durch den Reisenden R über die Benutzeroberfläche BU oder über die Call-Center-Einheit CCU eine Faxnummer oder ein Postanschrift eingegeben werden, an welche eine Weiterleitung der über die Auswahlliste ausgewählten Reisedokumentdaten RD1 - RDx erfolgen soll.

Zur Identifizierung und Authentifizierung des Reisenden R am Reisedokument-Managementsystem RMU ist die Eingabe von Identifikations- und Authentifizierungsdaten ID über die Benutzeroberfläche BU der Reisedaten-Managementroutine RMR oder über die Call-Center-Einheit CCU erforderlich. Als Identifikations- und Authentifizierungsdaten ID können beispielsweise der Name, Geburtstag, Wohnort des Reisenden oder der PIN-Code der Mobilfunkkarte und/oder der Ort des Vertragsabschlusses vorgesehen sein. Darüber hinaus kann die Eingabe eines benutzerindividuellen Passwortes zur Identifizierung und Authentifizierung des Reisenden R am Reisedaten-Managementsystem RMU erforderlich sein.

Zusätzlich oder alternativ sind vom Reisenden R vor Antritt der Reise computergesteuert durchführbare Transaktionen vorgebbar, welche in Form von ein oder mehreren Transaktionsroutinen TR1 - TRx in der Datenbankeinheit DB gespeichert werden und die nach einer Identifizierung und Authentifizierung des Reisenden R am Reisedokument-Managementsystem RMU automatisch aufgerufen und ausgeführt werden. Derartige computergesteuert durchführbare Trankaktionen können beispielsweise eine elektronische Sperrung der Kreditkarten und Scheckkarten des Reisenden R, dessen Mobilfunkkarte und/oder dessen Krankenkarte bewirken. Auch kann eine derartige computergesteuert durchführbare Transaktion eine elektronische Überweisung von Bargeld auf ein vom Reisenden R vorgegebenes Bankkonto im Reiseland sein, welches dem Reisenden R nach Diebstahl oder Verlust seines Bargeldes sowie seiner Kreditkarten eine schnelle und unkomplizierte Beschaffung von Bargeld im Reiseland ermöglicht.

Auch können durch den Reisenden R vor Antritt der Reise vorbereitete Dokumente oder Schreiben in Papierform mit Blanko-Unterschriften bereitgestellt werden, welche in einem computergesteuerten Schließfach SF hinterlegt werden. Das Schließfach SF ist mit der zentralen Rechnereinheit ZRU verbunden und kann gesteuert über die Reisedokument-Managementroutine RMR geöffnet bzw. entriegelt werden. Somit kann der Reisende R gesteuert über die Benutzeroberfläche BU oder die Call-Center-Einheit CCU die im computergesteuerten Schließfach SF hinterlegten Dokumente oder Schreiben mit Blanko-Unterschriften freigeben, welche anschließend vorzugsweise elektronisch weiterverarbeitet werden. Beispielsweise kann eine Anzeige des Verlustes eines Mobilfunkgerätes, von Schlüsseln oder Wertegegenständen mittels hierzu individuell vorbereiteter Blanko-Schreiben erfolgen, welches gesteuert über die Benutzeroberfläche BU elektronisch an die ebenfalls in der Datenbankeinheit DB hinterlegten Empfänger versandt werden.

In einer bevorzugten Ausführungsform erfolgt nach erstmaliger Identifizierung und Authentifizierung des Reisenden R am Reisedokument-Managementsystem RMU automatisch eine elektronische Benachrichtigungen von vom Reisenden R zu bestimmende oder bereits vor Reiseantritt festgelegten Personen. Beispielsweise werden an die jeweiligen Personen eine vorbereitete SMS-Nachricht, FAX-Nachricht oder eine E-Mail-Nachricht gesteuert durch das Reisedokument-Managementsystem RMU versandt.

Auch kann durch den Reisenden R zumindest einzelnen in der Datenbankeinheit DB in Form von personenbezogenen Reisedokumentdaten RD1 - RDx hinterlegten Reisedokumenten jeweils eine Ausstellungsbehörde zugeordnet werden, die computergesteuert über der Verlust oder Diebstahl der jeweiligen Reisedokumente informiert wird.

Das beschriebene Computersystem zur Wiederbeschaffung von personenbezogenen Reisedokumenten zumindest eines Reisenden R ermöglicht eine durch den im jeweiligen Reiseland befindlichen Reisenden R eine ferngesteuerte Beschaffung von , personenbezogenen Reisedokumenten und/oder eine Ausführung von durch den Reisenden R vorbestimmten Transaktionen im Heimatland. Diese betreffen beispielsweise die Übersendung von unter Verschluss gestellten Unterlagen, Dokumenten und/oder Gegenständen an eine durch den Reisenden R über das Reisedokument-Managementsystem RMU vorgegebene Anschrift. Somit wird es möglich, dass selbst nach Totalverlust sämtlicher Reisedokumente, Bargeld und weiterer wichtiger Gegenstände ein Reisender R innerhalb kürzester Zeit Bargeld versorgt wird und diesem Kopien der wichtigsten Reiseunterlagen zur Verfügung gestellt werden.

Die Erfindung wurde vorausgehend an einem Ausführungsbeispiel beschrieben, es versteht sich von selbst, dass Modifikationen und/oder Abwandlungen der Erfindungen im Rahmen des fachmännischen Könnens liegen, ohne hierdurch den erfindungsgemäßen Gedanken zu verlassen.

### Bezugszeichenliste

- CS: Computersystem
- RMU: Reisedokument-Managementsystem
- KN: Kommunikationsnetz
- KV, KV*: Datenverbindung
- DRU: dezentrale Rechnereinheit
- CCU: Call-Center-Einheit
- R: Reisender
- ZRU: zentrale Rechnereinheit
- DB: Datenbankeinheit
- RD1 - RDx: Reisedokumentdaten
- TR1 - TRx: Transaktionsroutinen
- RMR: Reisedaten-Managementroutine
- BU: Benutzeroberfläche
- SF: Schließfach
- ID: Identifikations- und Authentifizierungsdaten

## Patentansprüche

1. Computersystem zur Wiederbeschaffung von personenbezogenen Reisedokumenten zumindest eines Reisenden (R), umfassend zumindest eine zentrale und dezentrale Rechnereinheit (DRU, ZRU) und eine Datenbankeinheit (DB), wobei von der dezentralen Rechnereinheit (DRU) zumindest eine Kommunikationsverbindung (KV) zu der zentralen Rechnereinheit (ZRU) aufgebaut wird, **dadurch gekennzeichnet, dass** die personenbezogenen Reisedokumente zumindest eines Reisenden (R) vor Antritt der Reise in Form von elektronischen Reisedokumentdaten (RD1 - RDx) in der Datenbankeinheit (DB) gespeichert werden, und dass die Datenbankeinheit (DB) und die zentrale Rechnereinheit (ZRU) ein Reisedokument-Managementsystem (RMU) bilden, welches derart eingerichtet ist, dass über eine in der zentralen Rechnereinheit (ZRU) ausgeführte Reisedokument-Managementroutine (RMR) nach einer Identifizierung und Authentifizierung des Reisenden (R) am Reisedokument-Managementsystem (RMU) die dem Reisenden (R) in der Datenbankeinheit (DB) zugeordneten personenbezogenen Reisedokumentdaten (RD1 - RDx) über die Kommunikationsverbindung (KV) zur Verfügung gestellt werden.

2. Computersystem nach Anspruch 1, **dadurch gekennzeichnet, dass** das Reisedokument-Managementsystem (RMU) eine Benutzeroberfläche (BU) aufweist, über welche die dem Reisenden (R) in der Datenbankeinheit (DB) zugeordneten personenbezogenen Reisedokumentdaten (RD1 - RDx) angezeigt werden.

3. Computersystem nach Anspruch 2, **dadurch gekennzeichnet, dass** dem Reisenden (R) über die Benutzeroberfläche (BU) eine Auswahlliste mit den in Form von personenbezogenen Reisedokumentdaten (RD1 - RDx) gespeicherten Reisedokumenten angezeigt wird, über welche der Reisende (R) online die wiederzubeschaffenden personenbezogenen Reisedokumente auswählen kann.

4. Computersystem nach einem der Ansprüche 1 bis 3, **dadurch gekennzeichnet, dass** die Identifizierung und Authentifizierung des Reisenden (R) am Reisedokument-Managementsystem (RMU) durch die Eingabe von Identifikations- und Authentifizierungsdaten (ID) über die Benutzeroberfläche (BU) erfolgt.

5. Computersystem nach einem der Ansprüche 1 bis 4, **dadurch gekennzeichnet, dass** vom Reisenden (R) vor Antritt der Reise computergesteuert durchführbare Transaktionen vorgegeben werden, welche in Form von ein oder mehreren Transaktionsroutinen (TR1 - TRx) in der Datenbankeinheit (DB) gespeichert werden und die nach einer Identifizierung und Authentifizierung des Reisenden (R) am Reisedokument-Managementsystem (RMU) automatisch aufgerufen und ausgeführt werden,
und/oder
dass als computergesteuert durchführbare Transaktion eine elektronische Sperrung von Kreditkarten und Scheckkarten, der Mobilfunkkarte und/oder der Krankenkarte des Reisenden vorgesehen ist.

6. Computersystem nach einem der Ansprüche 1 bis 5, **dadurch gekennzeichnet, dass** durch den Reisenden (R) zumindest einzelnen in der Datenbankeinheit (DB) in Form von personenbezogenen Reisedokumentdaten (RD1 - RDx) hinterlegten Reisedokumenten jeweils eine Ausstellungsbehörde zugeordnet ist, die computergesteuert über den Verlust oder Diebstahl der jeweiligen Reisedokumente informiert wird.

7. Computersystem nach einem der Ansprüche 1 bis 6, **dadurch gekennzeichnet, dass** durch den Reisenden (R) vor Antritt der Reise vorbereitete Dokumente und/oder Schreiben mit Blanko-Unterschriften versehen werden, welche in einem computergesteuerten Schließfach (SF) hinterlegt sind, welches gesteuert über die Reisedokument-Managementroutine (RMR) entriegelbar ist.

8. Computersystem nach einem der Ansprüche 5 bis 7, **dadurch gekennzeichnet, dass** als weitere elektronische Transaktion eine elektronische Überweisung von Bargeld auf ein vom Reisenden (R) vorgegebenes Bankkonto im Reiseland vorgesehen ist,
und/oder
dass über die Benutzeroberfläche (BU) die Kontoverbindungsdaten des zur Überweisung vorgesehenen Bankkontos eingebbar sind,
und/oder
dass als Identifikations- und Authentifizierungsdaten (ID) der Name, Geburtstag, Wohnort, PIN Code des Mobilfunkgerätes und/oder Ort des Vertragsabschlusses vorgesehen sind.

9. Computersystem nach einem der vorhergehenden Ansprüche, **dadurch gekennzeichnet, dass** nach der Identifizierung und Authentifizierung des Reisenden (R) am Reisedokument-Managementsystem (RMU) eine automatische elektronische Benachrichtigung von durch den Reisenden (R) vorzugsweise vor Antritt der Reise bestimmten Personen über eine SMS-Nachricht, eine FAX-Nachricht oder eine Emailnachricht erfolgt.

10. Computersystem nach einem der vorhergehenden Ansprüche, **dadurch gekennzeichnet, dass** eine Sprachgesteuerte Bedienung der Reisedokument-Managementroutine (RMR) über eine Call-Center-Einheit (CCU) vorgesehen ist.
